# FASCICULE DE BREVET EUROPEEN

(11) **EP 1 931 567 B1**
(45) Date de publication et mention de la délivrance du brevet: **04.04.2012**
(21) Numéro de dépôt: 06793901.7
(22) Date de dépôt: 29.06.2006
(51) Int. Cl.: B64D 27/18

(54) **MAT D'ACCROCHAGE DE TURBOREACTEUR POUR AERONEF**
AUFHÄNGUNGSSTRUKTUR FÜR EIN TRIEBWERK FÜR EIN FLUGZEUG
TURBINE ENGINE MOUNTING STRUCTURE FOR AIRCRAFT

(30) Priorité: 03.10.2005 FR 0552989
(43) Date de publication de la demande: 18.06.2008
(73) Titulaire: AIRBUS OPERATIONS, 31060 Toulouse (FR)
(72) Inventeur: DIOCHON, Lionel, F-31000 Toulouse (FR); CETOUT, Jean-Michel, F-31100 Toulouse (FR); LAFONT, Laurent, F-31320 Pechbusque (FR); CHARTIER, David, F-31100 Toulouse (FR)
(74) Mandataire: Ilgart, Jean-Christophe
(86) Numéro de dépôt international: PCT/EP2006/066873
(87) Numéro de publication internationale: WO 2007/039556

(56) Documents cités:
- EP-A- 1 053 937
- US-A- 4 013 246
- US-A- 6 095 456
- US-A- 6 126 110
- US-A1- 2005 116 093

## Description

### DOMAINE TECHNIQUE

La présente invention se rapporte de façon générale à un mât d'accrochage de turboréacteur pour aéronef. Ce type de mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure.

### ÉTAT DE LA TECHNIQUE ANTÉRIEURE

Un tel mât d'accrochage est en effet prévu pour constituer l'interface de liaison entre un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieurs et inférieurs et de panneaux latéraux raccordés entre eux par l'intermédiaire de nervures transversales.

D'autre part, le mât est muni d'un système de montage interposé entre le turboréacteur et la structure rigide du mât, ce système comportant globalement au moins deux attaches moteur, généralement au moins une attache avant et au moins une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à une attache arrière fixée sur le carter central de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, un mât d'accrochage classique de l'art antérieur prend habituellement grossièrement la forme d'un caisson parallélépipédique, disposant de grandes dimensions afin de pouvoir reprendre la totalité des efforts générés par le turboréacteur associé.

Ainsi, dans ce cas précis où le mât d'accrochage en forme de caisson de grandes dimensions est agencé à proximité du carter central du turboréacteur, ce mât provoque alors inéluctablement des perturbations importantes du flux secondaire s'échappant du canal annulaire de soufflante, ce qui se traduit directement par une traînée importante, ainsi que des pertes en termes de rendement du turboréacteur et de consommation de carburant.

De plus, ces perturbations sont accentuées par la présence du dispositif de reprise des efforts de poussée du type à bielles latérales, situées en sortie du canal annulaire de soufflante.

Pour faire face à ces inconvénients, il a été proposé un mât disposant d'une structure rigide comportant un caisson central longitudinal et deux caissons latéraux solidaires d'une partie avant du caisson central, le mât disposant également d'une première et d'une seconde attache moteur avant conçues de manière à reprendre des efforts s'exerçant selon une direction longitudinale du mât, ces première et seconde attaches moteur avant étant respectivement agencées sur les deux caissons latéraux.

Cette configuration proposée permet d'assurer la reprise des efforts de poussée, c'est-à-dire ceux orientés selon la direction longitudinale du mât, par l'intermédiaire des deux caissons latéraux prévus à cet effet. Cette reprise peut être effectuée de manière totalement satisfaisante, dans le sens où les efforts de poussée passant par les première et seconde attaches avant peuvent alors facilement transiter par les peaux de ces caissons, que l'on peut ainsi qualifier de peaux travaillantes. Une fois ces efforts remontés au niveau d'une extrémité supérieure des caissons latéraux, ils arrivent ensuite au caisson central longitudinal à travers lequel ils peuvent être acheminés selon la direction longitudinale, vers l'arrière du mât.

De façon analogue, il est à comprendre que la reprise du moment s'exerçant selon la direction verticale est également assurée par les deux caissons latéraux, notamment par l'intermédiaire d'un cadre de fermeture avant et d'un cadre de fermeture arrière prévus sur chacun de ces caissons, et éventuellement également à l'aide d'un cadre intermédiaire situé entre les deux cadres de fermeture précités.

Enfin, il en est de même pour la reprise du moment s'exerçant selon la direction longitudinale du mât, cette reprise devant effectivement être assurée par les caissons latéraux lorsque les première et seconde attaches avant sont aussi conçues de manière à reprendre les efforts s'exerçant selon la direction verticale du mât.

Par ailleurs, comme indiqué ci-dessus, la structure rigide du mât d'accrochage comporte un caisson central longitudinal, également appelé caisson central de torsion, qui s'étend parallèlement à l'axe longitudinal de la surface fictive, et qui est donc solidaire de chacun des caissons latéraux. Bien entendu, la résistance mécanique apportée par ces caissons latéraux permet au caisson central de disposer de dimensions plus faibles que celles pratiquées antérieurement, principalement en ce qui concerne son épaisseur. Cela implique que ce caisson central est également en mesure de ne provoquer que de très faibles perturbations du flux secondaire s'échappant du canal annulaire de soufflante.

Cependant, ce type de structure rigide, également appelée structure primaire du mât d'accrochage, présente un inconvénient non négligeable résidant dans l'absence de moyens satisfaisants permettant d'assurer une fixation performante de l'ensemble des cadres de chaque caisson latéral sur le caisson central longitudinal, tout en offrant une facilité de montage.

Un tel mât est connu de US 6126110, qui montre toutes les caractéristiques du préambule de la revendication 1.

### EXPOSÉ DE L'INVENTION

L'invention a donc pour but de proposer un mât d'accrochage de turboréacteur pour aéronef remédiant au moins partiellement aux inconvénients mentionnés ci-dessus relatifs aux réalisations de l'art antérieur, et également de présenter un aéronef disposant d'au moins un tel mât.

Pour ce faire, l'invention a pour objet un mât d'accrochage de turboréacteur pour aéronef, le mât disposant d'une structure rigide comportant un caisson central longitudinal formé par l'assemblage de deux panneaux latéraux raccordés par l'intermédiaire de nervures transversales, la structure rigide comportant également deux caissons latéraux solidaires d'une partie avant du caisson central et disposés de part et d'autre de celui-ci, chaque caisson latéral disposant d'au moins un cadre, tel qu'un cadre de fermeture avant, un cadre de fermeture arrière, ou encore un cadre intermédiaire situé à l'intérieur du caisson. Selon l'invention, l'une desdites nervures transversales formant le caisson central longitudinal est équipée de deux extensions latérales réalisées d'un seul tenant avec cette nervure et faisant respectivement saillie des deux panneaux latéraux du caisson central longitudinal, vers l'extérieur de ce dernier. De plus, les deux extensions latérales sont montées fixement sur le cadre susmentionné de l'un et l'autre des deux caissons latéraux, respectivement.

Ainsi, dans le cas préféré mais non limitatif où le cadre indiqué ci-dessus est le cadre de fermeture arrière du caisson, le mât d'accrochage proposé permet alors avantageusement de fournir une fixation originale et performante de ces cadres de fermeture arrière sur le caisson central longitudinal de la structure rigide, grâce à la présence des extensions latérales qui sont donc entièrement solidaires de l'une des nervures transversales formant le caisson central longitudinal. La présence de cette pièce réalisée d'un tenant, entrant dans la constitution du caisson central et établissant une jonction mécanique entre ce dernier et chacun des deux cadres de fermeture arrière, permet en effet d'obtenir un transfert sûr et satisfaisant des efforts transitant dans les caissons latéraux et se dirigeant vers le caisson central.

De plus, avec cette solution, le raccordement mécanique des cadres de fermeture arrière sur le caisson central est très aisé et rapide à effectuer, puisque la mise en place des extensions latérales servant au raccordement de ces cadres de fermeture est obtenue automatiquement par la mise en place de la nervure transversale du caisson central portant ces extensions. Les opérations d'assemblage de la structure rigide du mât peuvent ainsi être avantageusement écourtées.

Bien entendu, les cadres sur lesquels les deux extensions latérales sont destinées à être montées fixement pourraient alternativement être des cadres de fermeture avant du caisson, ou encore des cadres intermédiaires également appelés cadres intérieurs en raison du fait qu'ils sont situés à l'intérieur des caissons, sans sortir du cadre de l'invention. D'une façon générale, il est indiqué que ces diverses cadres, également appelés armatures, supportent des peaux inférieure et supérieure du caisson associé, et sont préférentiellement disposés dans des plans transversaux. En outre, ils ont chacun un rôle structural au sein du caisson associé.

De préférence, toujours dans le cas préféré mais non limitatif où le cadre indiqué ci-dessus est le cadre de fermeture arrière du caisson, il est noté que le cadre arrière de chacun des deux caissons latéraux dispose d'une âme de part et d'autre de laquelle se situent une semelle inférieure et une semelle supérieure, les extensions latérales présentant chacune une première portion montée fixement sur l'âme de son cadre de fermeture associé.

De manière à renforcer le montage des cadres de fermeture arrière, on peut prévoir que les extensions latérales présentent chacune une seconde portion montée fixement sur la semelle supérieure de son cadre de fermeture associé.

Préférentiellement, chacune des extensions latérales est raccordée à la nervure transversale par l'intermédiaire d'un support d'extension également réalisé d'un seul tenant avec la nervure transversale et les deux extensions latérales, le support d'extension étant agencé de manière à obturer un passage d'extension pratiqué dans le panneau latéral associé. Ainsi, le caisson central longitudinal peut alors conserver son étanchéité grâce au logement des supports d'extension dans les passages d'extension prévus sur les panneaux latéraux.

Par ailleurs, pour chacune des deux extensions latérales, une surface extérieure du support d'extension se situe sensiblement dans un même plan qu'une surface extérieure du panneau latéral associé. De cette manière, on obtient une bonne continuité aérodynamique sur les surfaces extérieures latérales du caisson central, malgré la présence des extensions faisant saillie extérieurement de ce dernier.

Le mât peut en outre comprendre une nervure transversale additionnelle superposée à la nervure transversale équipée des deux extensions latérales, cette nervure transversale additionnelle étant également équipée de deux extensions latérales additionnelles réalisées d'un seul tenant avec cette nervure et faisant respectivement saillie des deux panneaux latéraux du caisson central longitudinal, vers l'extérieur de ce dernier. De plus, les deux extensions latérales additionnelles sont montées fixement sur le cadre de fermeture arrière de l'un et l'autre des deux caissons latéraux, respectivement.

On peut comprendre que cette nervure transversale additionnelle et les deux extensions latérales additionnelles forment conjointement une pièce unique sensiblement identique à celle décrite précédemment. Elle peut alors remplir une fonction de sécurité, également appelée « Fail Safe », à savoir permettre d'assurer les fonctionnalités attachées à la première pièce réalisée d'un seul tenant, en cas de rupture ou de défaillance de cette dernière. Néanmoins, cette seconde pièce réalisée d'un seul tenant pourrait aussi être employée tout simplement afin de renforcer le maintien mécanique procuré par la première pièce, sans sortir du cadre de la présente invention.

Dans un tel cas, on peut prévoir que pour chacun des deux caissons latéraux, une extension latérale et une extension latérale additionnelle sont disposées de part et d'autre d'une âme du cadre de fermeture arrière.

De plus, toujours dans le cas où le cadre arrière de chacun des deux caissons latéraux dispose d'une âme de part et d'autre de laquelle se situent une semelle inférieure et une semelle supérieure, on prévoit alors préférentiellement que les extensions latérales additionnelles présentent chacune une première portion montée fixement sur l'âme de son cadre de fermeture associé, ainsi qu'éventuellement une seconde portion montée fixement sur la semelle supérieure de ce même cadre.

Bien entendu, à la fois pour les extensions latérales et les extensions latérales additionnelles, ces dernières pourraient être seulement munies de la seconde portion précitée montée fixement sur la semelle supérieure du cadre de fermeture arrière, sans sortir du cadre de l'invention.

Ici encore, chacune des extensions latérales additionnelles est raccordée à la nervure transversale additionnelle par l'intermédiaire d'un support d'extension additionnelle également réalisé d'un seul tenant avec la nervure transversale additionnelle et les deux extensions latérales additionnelles, le support d'extension additionnelle étant agencé de manière à obturer un passage d'extension additionnelle pratiqué dans le panneau latéral associé.

Aussi, pour chacune des deux extensions latérales additionnelles, une surface extérieure du support d'extension additionnelle se situe sensiblement dans un même plan qu'une surface extérieure du panneau latéral associé.

De cette façon, ces spécificités permettent respectivement au caisson central longitudinal de conserver son étanchéité grâce au logement des supports d'extension additionnelle dans les passages d'extension additionnelle prévus sur les panneaux latéraux, et d'assurer une bonne continuité aérodynamique sur les surfaces extérieures latérales du caisson central, malgré la présence des extensions additionnelles faisant saillie extérieurement de ce dernier.

A ce titre, on peut prévoir que pour chacun des deux panneaux latéraux du caisson central longitudinal, le passage d'extension et le passage d'extension additionnelle forment conjointement un unique passage obturé par les support d'extension et support d'extension additionnelle.

De préférence, les deux caissons latéraux présentent chacun une peau inférieure délimitant conjointement une partie d'une surface fictive sensiblement cylindrique de section circulaire, et d'axe longitudinal préférentiellement destiné à être confondu avec l'axe longitudinal du turboréacteur.

Ainsi, chacune des deux peaux inférieures dispose donc d'une courbure lui permettant de s'étendre autour de cette surface fictive sensiblement cylindrique de section circulaire. Elles forment par conséquent conjointement un ensemble de la structure rigide qui est avantageusement capable de n'être que très peu contraignant en termes de perturbation du flux secondaire s'échappant du canal annulaire de soufflante du turboréacteur lui étant associé, comparativement aux solutions classiques de l'art antérieur dans lesquelles le mât d'accrochage prenait la forme d'un unique caisson central parallélépipédique de grandes dimensions, disposé de façon très rapprochée du carter central du turboréacteur.

Effectivement, il est possible de prévoir qu'un diamètre de la surface fictive est sensiblement identique à un diamètre d'une surface cylindrique externe du carter de soufflante du turboréacteur associé, impliquant que l'ensemble rigide formé par les peaux inférieures se situent alors sensiblement dans le prolongement de cette surface externe du carter de soufflante, et plus généralement dans le prolongement d'une partie annulaire périphérique de ce carter. Naturellement, dans ce cas précis où les deux caissons latéraux sont assimilables à une portion d'enveloppe sensiblement cylindrique de section circulaire et de diamètre proche de celui du carter de soufflante, les perturbations du flux secondaire susceptibles d'être provoquées par ces caissons sont extrêmement faibles, voire quasiment inexistantes.

Cela permet alors avantageusement d'obtenir des gains en traînée, en rendement du turboréacteur, ainsi qu'en consommation de carburant.

A titre indicatif, il est noté que si les deux caissons latéraux sont assimilables de façon générale à une portion d'une enveloppe sensiblement cylindrique de section circulaire, elle prend de préférence la forme d'une portion d'une enveloppe sensiblement cylindrique de section semi-circulaire. Naturellement, cette forme préférée est tout à fait adaptée pour assurer un montage aisé du turboréacteur sur la structure rigide du mât d'accrochage.

D'autre part, comme indiqué ci-dessus, le caisson central longitudinal situé entre les deux caissons latéraux est agencé de manière à n'engendrer que de très faibles perturbations du flux secondaire. Pour ce faire, on peut prévoir que seule une infime portion de sa partie inférieure fait saillie à l'intérieur de la surface fictive.

L'invention a également pour objet un aéronef comprenant au moins un mât d'accrochage tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un mât d'accrochage selon un mode de réalisation préféré de la présente invention ;
- la figure 2 représente une vue schématique en perspective de l'ensemble représenté sur la figure 1, la structure rigide du mât d'accrochage ayant été retirée pour laisser plus clairement apparaître les attaches moteur de ce même mât ;
- la figure 3 représente une vue partielle et agrandie en perspective du mât d'accrochage selon le mode de réalisation préféré ;
- la figure 4 représente une vue en coupe prise selon le plan transversal P1 de la figure 3 ;
- la figure 5 représente une vue en perspective destinée à expliquer la forme des caissons latéraux prévus pour constituer partiellement le mât d'accrochage de la figure 3 ;
- la figure 6 représente une vue éclatée de celle montrée sur la figure 3 ;
- la figure 7 représente une vue similaire à celle montrée sur la figure 3, à laquelle il a été rajouté une représentation schématique des attaches moteur du mât d'accrochage ;
- la figure 8 représente une vue similaire à celle montrée sur la figure 2, sur laquelle les attaches moteur du mât d'accrochage se présentent sous la forme d'une alternative ;
- la figure 9 représente une vue agrandie et détaillée en perspective d'une partie du mât d'accrochage montré sur la figure 3 ;
- la figure 10 représente une vue en coupe transversale du mât d'accrochage montré sur la figure 9, prise selon un plan traversant la nervure transversale du caisson central portant les extensions latérales prévues pour raccorder les cadres de fermeture arrière des caissons latéraux ;
- la figure 11 représente une vue en coupe longitudinale du mât d'accrochage montré sur la figure 9, prise selon un plan traversant l'une des deux extensions latérales ; et
- la figure 12 représente une vue en coupe transversale du mât d'accrochage montré sur la figure 9, prise selon un plan traversant la nervure transversale additionnelle portant les extensions latérales additionnelles prévues pour raccorder les cadres de fermeture arrière des caissons latéraux.

### EXPOSÉ DÉTAILLÉ DE MODES DE RÉALISATION PARTICULIERS

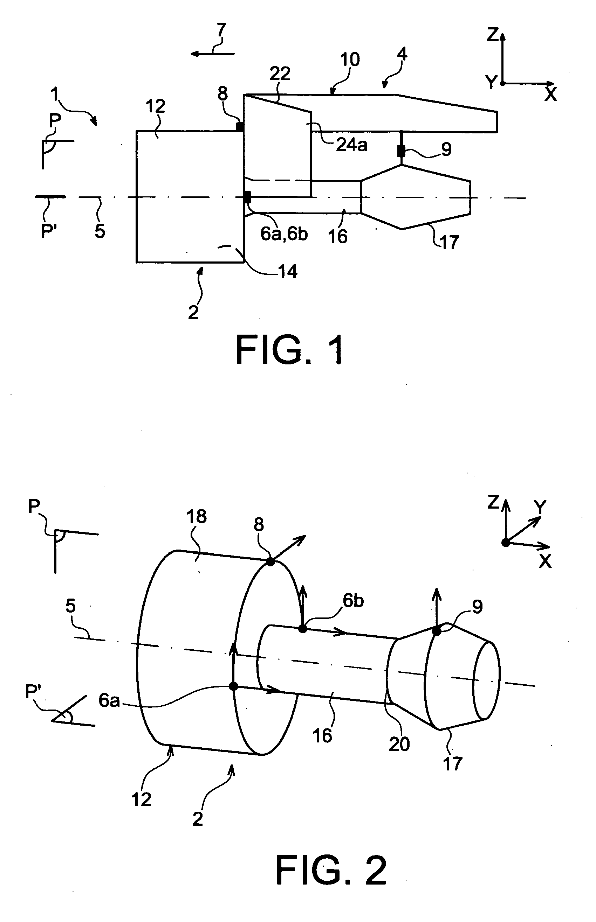

En référence à la figure 1, on voit un ensemble moteur 1 pour aéronef destiné à être fixé sous une aile de cet aéronef (non représentée), cet ensemble 1 comportant un mât d'accrochage 4 selon un mode de réalisation préféré de la présente invention.

Globalement, l'ensemble moteur 1 est composé d'un turboréacteur 2 et du mât d'accrochage 4, ce dernier étant muni notamment d'une pluralité d'attaches moteur 6a, 6b, 8, 9 et d'une structure rigide 10 portant ces mêmes attaches (l'attache 6b étant masquée par l'attache 6a sur cette figure 1). A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6a, 6b, 8, 9 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, une première attache moteur avant 6a ainsi qu'une seconde attache moteur avant 6b sont toutes deux destinées à être fixées sur le carter de soufflante 12, de façon symétrique par rapport à un plan P défini par l'axe 5 et la direction Z.

En effet, en référence à présent à la figure 2, on peut voir que la première attache 6a et la seconde attache 6b représentées schématiquement sont disposées de façon symétrique par rapport à ce plan P, et de préférence agencées toutes les deux sur une partie annulaire périphérique du carter de soufflante 12, et plus précisément sur l'arrière de cette même partie.

On peut alors prévoir que les première et seconde attaches moteur avant 6a, 6b sont diamétralement opposées sur la partie annulaire périphérique présentant une surface externe cylindrique 18 du carter de soufflante 12, de sorte que ces attaches 6a, 6b sont donc chacune traversées par un second plan P' défini par l'axe longitudinal 5 et la direction Y.

Comme cela est montré schématiquement par les flèches de la figure 2, chacune des première et seconde attaches moteur avant 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b fortement éloignées l'une de l'autre assurent conjointement la reprise du moment s'exerçant selon la direction X, et celle du moment s'exerçant selon la direction Z.

Toujours en référence à la figure 2, on peut voir une troisième attache moteur avant 8 représentée schématiquement et aussi fixée sur la partie annulaire périphérique du carter de soufflante 12, également de préférence sur l'arrière de cette partie.

Les attaches 6a, 6b, 8 sont fixées sur la partie annulaire périphérique du carter 12 par l'intermédiaire de parties structurales (non représentées) du moteur, qui sont effectivement de préférence agencées sur l'arrière de la partie annulaire périphérique. Néanmoins, il est également possible de rencontrer des moteurs dont les parties structurales sont situées plus vers l'avant sur la partie annulaire périphérique, impliquant que les attaches 6a, 6b, 8 sont elles aussi fixées plus vers l'avant du moteur, toujours sur la partie annulaire périphérique du carter de soufflante 12.

En ce qui concerne la troisième attache 8, celle-ci se situe sur la partie la plus haute du carter de soufflante 12, donc sur la partie la plus haute de la partie annulaire périphérique, et est par conséquent traversée fictivement par le premier plan P indiqué ci-dessus. En outre, les trois attaches 6a, 6b et 8 sont préférentiellement traversées par un plan YZ (non représenté).

Comme cela est montré schématiquement par les flèches de la figure 2, la troisième attache moteur 8 est conçue de manière à pouvoir reprendre uniquement des efforts générés par le turboréacteur 2 selon la direction Y, et donc pas ceux s'exerçant selon les directions X et Z.

Toujours en référence à la figure 2, on peut voir une attache moteur arrière 9 représentée schématiquement, et fixée entre la structure rigide 10 (non visible sur cette figure) et le carter d'éjection 17, de préférence au niveau de la portion de ce carter 17 ayant le plus grand diamètre. A titre indicatif, il est précisé que cette attache arrière 9 est de préférence traversée fictivement par le premier plan P.

Comme cela est montré schématiquement par les flèches de la figure 2, l'attache moteur arrière 9 est conçue de manière à pouvoir reprendre uniquement des efforts générés par le turboréacteur 2 selon la direction Z, et donc pas ceux s'exerçant selon les directions X et Y.

De cette manière, cette attache 9 assure donc conjointement avec les deux attaches avant 6a, 6b la reprise du moment s'exerçant selon la direction Y.

Naturellement, cette attache arrière 9 pourrait être placée différemment, à savoir sur le carter central 16 du turbomoteur 2, de préférence sur une partie arrière de celui-ci, ou encore au niveau d'une jonction 20 entre le carter central 16 et le carter d'éjection 17.

Il est noté que si les attaches moteur 6a, 6b, 8 et 9 ont été représentées de façon schématique sur les figures 1 et 2, il est à comprendre que ces attaches peuvent être réalisées selon toute forme connue de l'homme du métier, telle que par exemple celle relative à l'assemblage de manilles et de ferrures.

Comme cela a été évoqué précédemment, un des avantages principaux associés à la configuration qui vient d'être décrite réside dans le fait que la position spécifique des attaches moteur avant 6a, 6b, 8 sur le carter de soufflante 12 entraîne une diminution considérable de la flexion du carter central 16 durant les diverses situations de vol de l'aéronef, et provoque donc une baisse significative de l'usure par frottement des pales de compresseur et de turbine contre ce carter central 16.

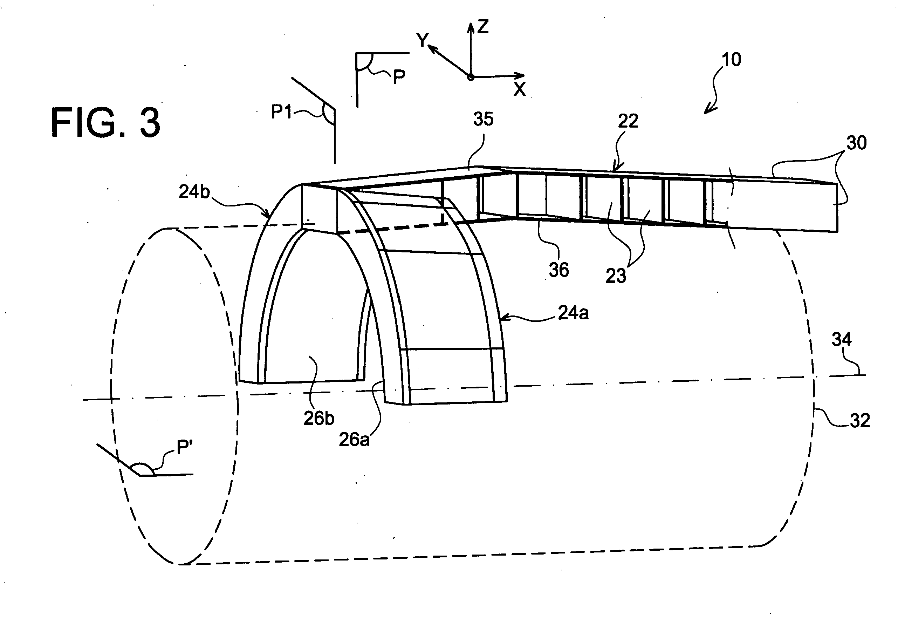

En référence à présent à la figure 3, on voit de façon détaillée la structure rigide 10 du mât d'accrochage 4 objet de la présente invention, les attaches moteur 6a, 6b, 8, 9 ayant volontairement été omises sur cette figure.

Tout d'abord, il est indiqué que cette structure rigide 10 est conçue de manière à présenter une symétrie par rapport au premier plan P indiqué ci-dessus, c'est-à-dire par rapport au plan vertical défini par l'axe longitudinal 5 du turboréacteur 2, et la direction Z.

Cette structure rigide 10 comporte un caisson central longitudinal 22, également appelé caisson de torsion, qui s'étend d'un bout à l'autre de la structure 10 dans la direction X, parallèlement à cette même direction. A titre indicatif, ce caisson 22 peut être formé par l'assemblage de deux panneaux latéraux 30 s'étendant selon la direction X dans des plans XZ parallèles, et raccordés entre eux par l'intermédiaire de nervures transversales 23 qui sont quant à elles orientées dans des plans YZ parallèles. En outre, un longeron supérieur 35 et un longeron inférieur 36 sont également prévus pour fermer le caisson 22. Il est noté à titre indicatif que les éléments 30, 35 et 36 peuvent chacun être réalisés d'un seul tenant, ou bien par l'assemblage de sections jointives, qui peuvent éventuellement être légèrement inclinées les unes par rapport aux autres.

Deux caissons latéraux 24a, 24b viennent compléter la structure rigide 10 dont le caisson central 22 se situe au niveau d'une portion supérieure de cette même structure 10, chacun des deux caissons 24a, 24b étant solidaire du caisson central de torsion 22 et faisant saillie de part et d'autre de celui-ci selon la direction Y, et vers le bas.

L'une des particularités de ces caissons latéraux rapportés solidairement à l'avant du caisson central 22 est qu'ils présentent chacun une peau inférieure 26a, 26b orientée vers le turboréacteur et délimitant conjointement une partie d'une surface fictive 32 sensiblement cylindrique de section circulaire, et d'axe longitudinal 34 parallèle au caisson central 22 et à la direction X, comme cela est visible sur la figure 3.

En d'autres termes, ces deux peaux inférieures 26a, 26b disposent chacune d'une courbure adaptée pour pouvoir se positionner autour et au contact de cette surface fictive 32, sur toute leur longueur. Ainsi, d'une manière générale, les deux caissons 24a, 24b forment ensemble une portion d'une enveloppe/cage sensiblement cylindrique de section circulaire, susceptible d'être positionnée autour et à distance du carter central 16 du turboréacteur 2.

A titre indicatif, il est précisé que l'axe 34 est de préférence confondu avec l'axe longitudinal 5 du turbopropulseur 2. Par conséquent, on peut se rendre compte que la structure rigide 10 présente également une symétrie par rapport au plan vertical défini par l'axe longitudinal 34 et la direction Z du mât 4.

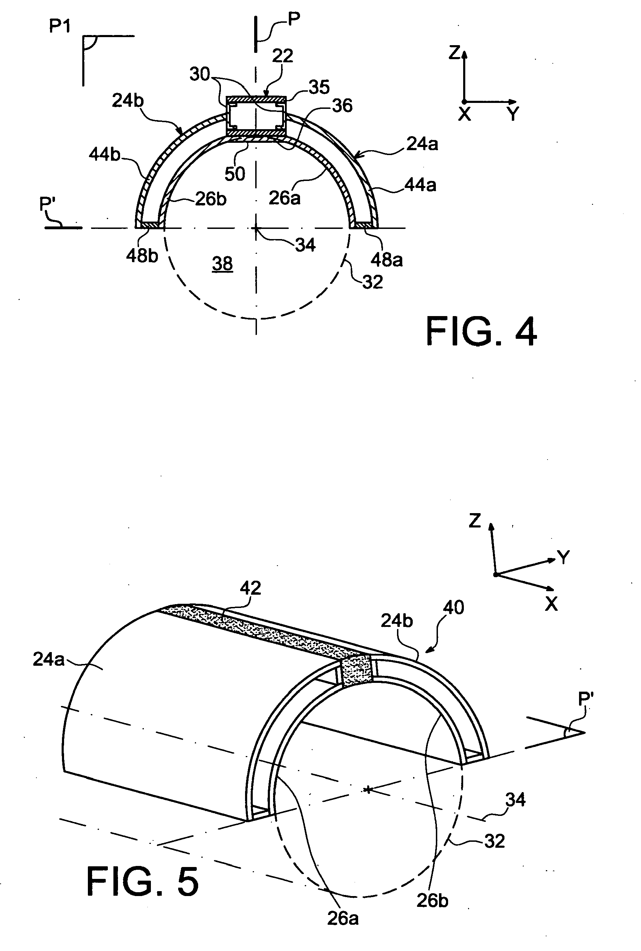

La figure 4 représente une vue en coupe prise selon un plan P1 transversal traversant de façon quelconque les caissons latéraux 24a, 24b.

Sur cette figure, on peut effectivement voir que les deux peaux inférieures 26a, 26b délimitent avec leur surface externe une partie de la surface fictive 32 sensiblement cylindrique de section circulaire, et que les deux caissons 24a, 24b constituent bien une portion d'une enveloppe/cage sensiblement cylindrique de section semi-circulaire centrée sur l'axe longitudinal 34, comme cela sera également décrit en référence à la figure 5.

Il est noté que pour créer le moins de perturbation possible du flux secondaire s'échappant du canal annulaire de soufflante 14, le diamètre de la surface fictive cylindrique 32 est de préférence sensiblement identique au diamètre de la surface externe cylindrique 18 de la partie annulaire du carter de soufflante 12. D'autre part, comme on peut le voir sur la figure 4, les éléments du caisson central 22 ne font saillie que sur une très petite distance à l'intérieur de l'espace 38 délimité par la surface fictive 32, de sorte qu'ils ne perturbent pas non plus significativement l'écoulement du flux d'air secondaire. Cela s'explique notamment par le fait que les panneaux latéraux 30 disposent d'une hauteur selon la direction Z qui est extrêmement petite par rapport au diamètre des surfaces fictive 32 et externe 18.

Pour illustrer de façon schématique la forme préférée des caissons latéraux 24a, 24b, la figure 5 montre que ceux-ci constituent conjointement une partie seulement d'une enveloppe/cage 40 sensiblement cylindrique de section semi-circulaire, centrée sur l'axe longitudinal 34 et entourant la moitié supérieure de la surface fictive 32. Ainsi, sur cette figure 5, la partie 42 représentée de façon hachurée correspond à la partie manquant aux deux caissons 24a, 24b pour former le demi-cylindre complet 40. A titre indicatif, il est noté que sur le mât représenté sur les figures 3 et 4, cette partie 42 est en fait remplacée par une partie du caisson central 22 faisant très légèrement saillie à l'intérieur de la surface fictive 32 et joignant les deux caissons 24a, 24b. En outre, cette représentation permet également de comprendre le fait que ces deux caissons latéraux forment sensiblement un prolongement vers l'arrière de la partie annulaire périphérique du carter de soufflante 12.

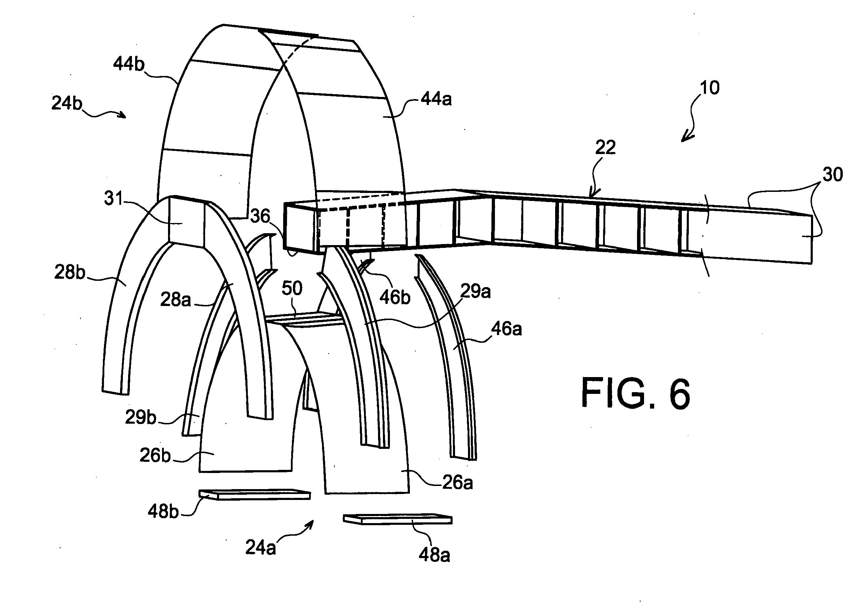

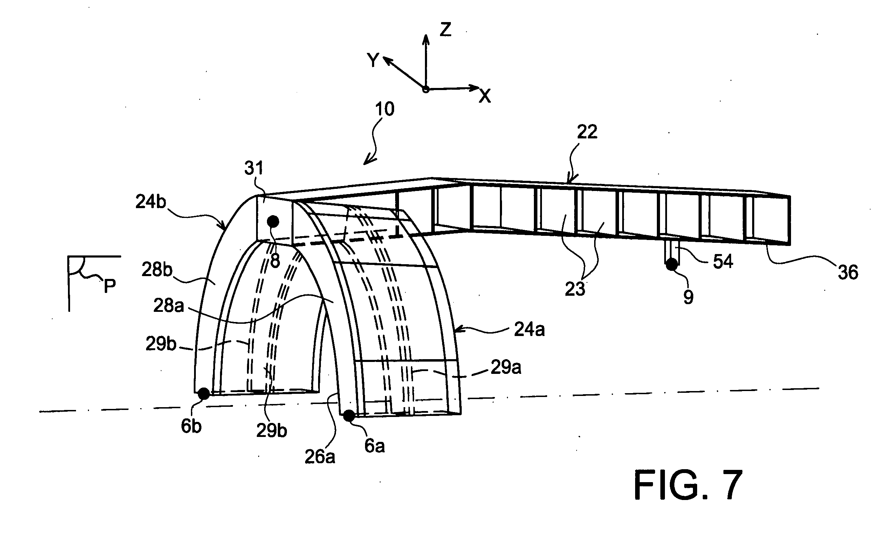

En référence conjointement aux figures 6 et 7, on peut voir que le caisson latéral 24a, identique et symétrique au caisson latéral 24b, comporte la peau inférieure 26a parallèle à la direction X et constituant une portion d'un élément cylindrique de section circulaire, ainsi qu'une peau supérieure 44a également parallèle à la direction X et constituant aussi une portion d'un élément cylindrique de section circulaire. Les peaux 26a et 44a sont de préférence concentriques.

Les peaux 26a, 44a sont raccordées l'une à l'autre par l'intermédiaire d'un cadre de fermeture avant 28a et d'un cadre de fermeture arrière 46a, ces cadres 28a, 46a étant donc orientés transversalement et situés respectivement à l'avant et à l'arrière du caisson 24a. Pour renforcer la rigidité du caisson 24a, il peut également être prévu un cadre intermédiaire 29a raccordant les peaux 26a, 44a et étant situé entre les deux cadres de fermeture 28a, 46a, ce cadre intermédiaire 29a, servant donc également de support pour les peaux inférieure et supérieure, étant aussi orienté transversalement.

En outre, une plaque de fermeture 48a parallèle au plan P' et de préférence traversée par ce même plan vient fermer une partie inférieure du caisson 24a, et relie donc l'extrémité inférieure des cadres 28a, 46a et des peaux 26a, 44a.

Naturellement, le caisson latéral 24b comporte des éléments 26b, 44b, 28b, 29b, 46b et 48b, respectivement identiques aux éléments 26a, 44a, 28a, 29a, 46a et 48a du caisson 24a. De plus, en ce qui concerne les cadres 28b, 29b, 46b, il sont disposés de façon symétrique par rapport aux cadres 28a, 29a, 46a, selon le plan P.

Comme on peut le voir sur les figures 6 et 7, on peut prévoir que les deux peaux inférieures 26a, 26b sont réalisées d'une seul tenant et reliées entre elles au niveau de leur partie supérieure par l'intermédiaire d'une plaque de jonction 50 orientée selon un plan XY, et située au contact du longeron inférieur 36 du caisson central 22. Bien entendu, cette plaque 31 de largeur identique à celle du longeron inférieur 36 fait légèrement saillie vers l'intérieur de la surface fictive 32.

De façon analogue, on peut aussi prévoir que les deux cadres de fermeture avant 28a, 28b sont réalisés d'une seul tenant et reliés entre eux au niveau de leur partie supérieure par l'intermédiaire d'un cadre de fermeture avant 31 du caisson 22, ce cadre 31 étant orienté selon un plan YZ. Par conséquent, dans cette configuration, les cadres 28a, 28b, 31 réalisés d'une seul tenant sont donc agencés dans un même plan YZ, et constituent une extrémité avant de la structure rigide 10 du mât 4.

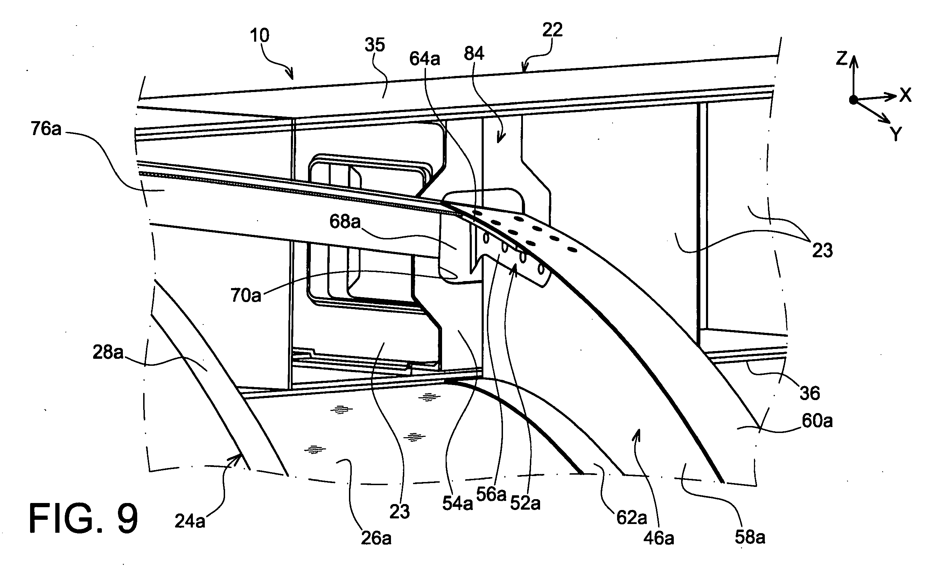

Par ailleurs, il est noté que les extrémités supérieures des cadres de fermeture arrière 46a, 46b et des peaux 44a, 44b sont montées solidairement sur le caisson 22 à l'aide de moyens spécifiques à la présente invention, qui seront décrits de façon détaillée en référence aux figures 9 à 12. D'autre part, si le raccordement des extrémités supérieures des cadres intermédiaires 29a, 29b sur le caisson 22 n'est pas décrit, il doit être compris que celui-ci peut s'effectuer d'une manière analogue à celle qui sera donc décrite en référence aux figures 9 à 12, pour les extrémités supérieures des cadres de fermeture arrière 46a, 46b.

En référence à présent à la figure 7, on voit que la structure rigide 10 du mât d'accrochage 4 est tout à fait adaptée pour supporter les attaches moteur avant 6a, 6b, 8, puisque celles-ci peuvent être facilement fixées sur la pièce transversale réalisée d'un seul tenant intégrant les cadres 28a, 28b et 31. En effet, les première et seconde attaches 6a, 6b sont respectivement fixées aux deux extrémités inférieures des deux cadres de fermeture avant 28a, 28b de façon à être traversées par le plan P', tandis que la troisième attache 8 est solidaire du cadre de fermeture avant 31 situé entre les cadres 28a, 28b précités. De cette manière, il est donc à comprendre que les deux attaches moteur avant 6à, 6b sont disposées de façon symétrique par rapport au plan vertical défini par l'axe longitudinal 34 et la direction Z du mât 4, de même que la troisième attache moteur 8 est traversée par ce même plan identique au premier plan P mentionné précédemment.

L'attache moteur arrière 9 est quant à elle fixée au-dessous du caisson central 22 par l'intermédiaire d'un support 54 solidaire du longeron inférieur 36. Ce support 54 s'étend depuis le longeron inférieur 36, selon la direction Z vers le bas, sur une distance suffisamment importante pour permettre à l'attache 9 de venir se monter sur le carter d'éjection 17 du turboréacteur 2.

A titre d'exemple indicatif, la totalité des éléments constitutifs de la structure rigide 10 qui vient d'être décrite est réalisée à l'aide de matériaux métalliques, tels que l'acier, l'aluminium, le titane, ou encore à l'aide de matériaux composites, de préférence en carbone.

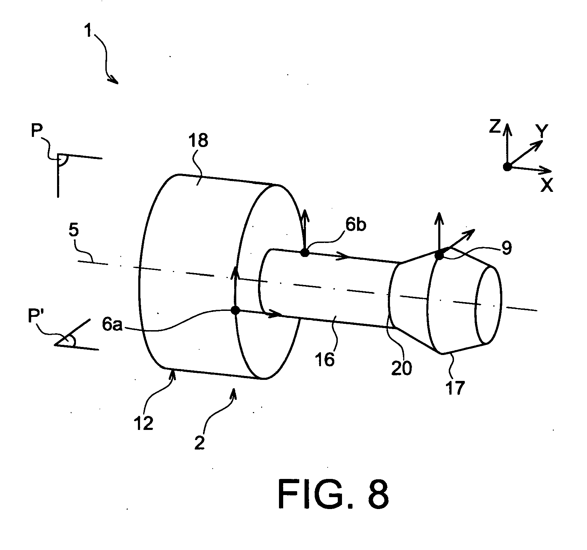

En référence à la figure 8, on peut voir un ensemble moteur 1 pour aéronef selon une alternative du mode de réalisation préféré présenté ci-dessus (la structure rigide du mât d'accrochage n'étant pas représentée). Cet ensemble est similaire à celui décrit ci-dessus. Ainsi, les éléments portant les mêmes références numériques correspondent à des éléments identiques ou similaires.

La principale différence présentée par cette alternative consiste à supprimer la troisième attache moteur avant, et à prévoir que l'attache moteur arrière 9 assure non seulement la reprise des efforts s'exerçant selon la direction Z, mais également celle des efforts s'exerçant selon la direction Y. Ainsi, cette alternative procure également une pluralité d'attaches moteur formant un système de montage isostatique.

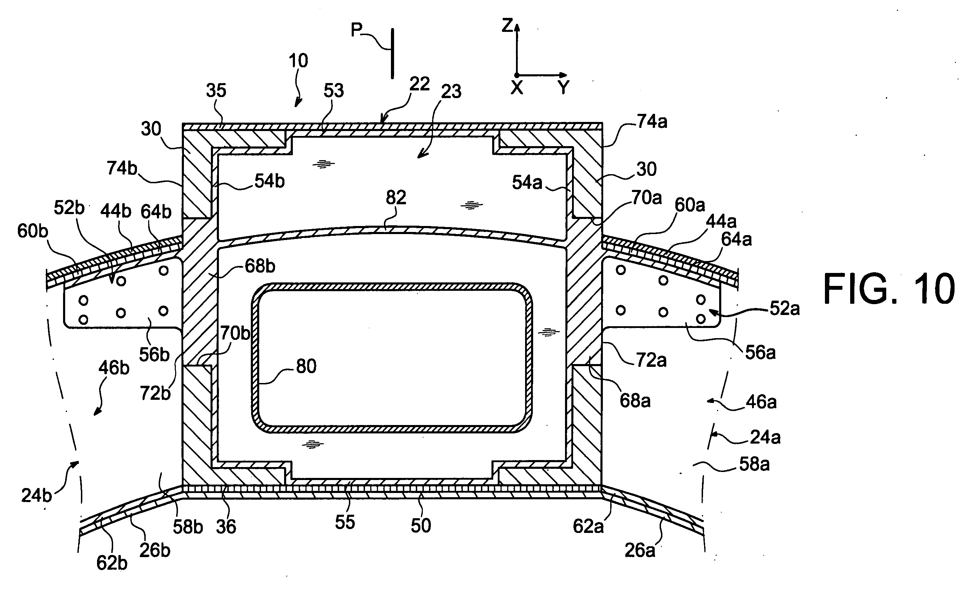

A présent en référence aux figures 9 et 10, on peut voir que l'une des particularités de la présente invention réside dans le fait que l'une des nervures transversales 23 formant le caisson central 22 est munie de deux extensions latérales 52a, 52b réalisées d'un seul tenant avec celle-ci, par exemple dans un matériau métallique tel que le titane. Ces extensions sont préférentiellement situées à une hauteur intermédiaire entre celle du flanc supérieur 53 et celle du flanc inférieur 55 de la nervure 23, qui sont quant à eux respectivement agencés selon des plans XY au contact du longeron supérieur 35 et du longeron inférieur 36 formant le caisson 22. Cela s'explique notamment par le fait que les cadres de fermeture arrière 46a, 46b auxquels les extensions 52a, 52b sont raccordées disposent chacun d'une extrémité supérieure qui vient de préférence au contact d'une partie intermédiaire du panneau latéral 30 associé, et non au niveau d'une partie d'extrémité supérieure ou d'une partie d'extrémité inférieure de celui-ci.

Chaque extension latérale 52a, 52b s'étend donc globalement dans la direction Y à partir de l'un des deux flancs latéraux 54a, 54b de la nervure 23 pour faire saillie de son panneau latéral 30 associé, impliquant que chaque extension latérale 52a, 52b se situe extérieurement par rapport au caisson central 22.

Plus précisément, en ce qui concerne l'extension 52a, celle-ci comporte une première portion 56a montée fixement sur une âme 58a du cadre 46a, par exemple à l'aide de moyens d'assemblage du type boulons. Cette âme 58a se situe dans un plan YZ et porte une semelle supérieure 60a ainsi qu'une semelle inférieure 62a, les surfaces extérieures de ces deux semelles étant prévues pour servir de support de fixation pour les peaux de caisson latéraux 44a, 26a avec lesquelles elles sont en contact, comme cela est clairement visible sur la figure 10. Ainsi, la première portion 56a se trouve également dans un plan YZ, en contact plan avec l'âme sur laquelle elle est montée fixement.

Par ailleurs, l'extension 52a comporte aussi une seconde portion 64a montée fixement sur la semelle supérieure 60a du cadre 46a, par exemple à l'aide de moyens d'assemblage du type boulons. Ainsi, la seconde portion 64a dispose d'une forme adaptée pour suivre le profil courbe de la semelle supérieure 60a. Elle est de préférence au contact d'une surface inférieure de la semelle 60a sur laquelle elle est montée fixement, comme cela est clairement visible sur la figure 10.

Par ailleurs, il est noté que les deux portions de l'extension 56a, 64a s'étendent sur une longueur sensiblement identique le long du cadre 46a, et disposent de préférence d'une arête commune, de sorte qu'ils constituent un élément de section en forme de L.

L'extension 52a n'est pas directement au contact avec le flanc latéral 54a s'étendant selon un plan XZ, puisqu'il est prévu d'interposer un support d'extension latérale 68a entre ce même flanc 54a et l'extension 52a. En effet, ce support 68a réalisé dans la même pièce que les autres éléments précités prend la forme d'une surépaisseur selon la direction Y, s'étendant extérieurement à partir du flanc latéral 54a. Comme cela est le mieux visible sur la figure 10, sa fonction est d'obturer un passage d'extension 70a pratiqué dans le panneau latéral 30 adjacent. Il est précisé que ce passage 70a est réalisé dans le but de pouvoir installer le panneau 30 après avoir mis en place la nervure 23 sur le caisson 22, bien entendu en faisant en sorte que l'extension 52a traverse le passage 70a durant la mise en position du panneau latéral 30.

L'obturation du passage 70a est recherchée de manière à pouvoir conserver l'étanchéité du caisson 22, malgré la présence de ce passage requise pour permettre la mise en position du panneau latéral 30 fermant latéralement le caisson central 22.

Pour pouvoir assurer une bonne continuité aérodynamique sur la surface extérieure latérale du caisson central essentiellement formée par la surface extérieure du panneau latéral 30, on fait en sorte qu'une surface extérieure 72a du support d'extension 68a se situe sensiblement dans un même plan que la surface extérieure 74a du panneau latéral précité, comme on peut clairement l'apercevoir sur la figure 10.

A cet égard, il est noté que dans la mesure où le flanc latéral 54a de la nervure 23 est au contact d'une surface intérieure du panneau latéral 30, l'épaisseur du support d'extension 68a est sensiblement identique à celle de ce même panneau 30.

En ce qui concerne l'extension 52b uniquement visible sur la figure 10, celle-ci est le symétrique de l'extension 52a par rapport au plan P, qui constitue d'ailleurs de préférence un plan de symétrie pour l'ensemble de la pièce réalisée d'un seul tenant et intégrant la nervure 23.

Ainsi, l'extension 52b comporte une première portion 56b montée fixement sur une âme 58b du cadre de fermeture 46b, par exemple à l'aide de moyens d'assemblage du type boulons. Cette âme 58b se situe dans un plan YZ et porte une semelle supérieure 60b ainsi qu'une semelle inférieure 62b, les surfaces extérieures de ces deux semelles étant prévues pour servir de support de fixation pour les peaux de caisson latéraux 44b, 26b avec lesquelles elles sont en contact. Ainsi, la première portion 56b se trouve également dans un plan YZ, en contact plan avec l'âme sur laquelle elle est montée fixement.

L'extension 52b comporte aussi une seconde portion 64b montée fixement sur la semelle supérieure 60b du cadre 46b, par exemple à l'aide de moyens d'assemblage du type boulons. Ainsi, la seconde portion 64b dispose d'une forme adaptée pour suivre le profil courbe de la semelle supérieure 60b. Elle est de préférence au contact d'une surface inférieure de la semelle 60b, sur laquelle elle est montée fixement.

Par ailleurs, il est noté que les deux portions de l'extension 56b, 64b s'étendent sur une longueur sensiblement identique le long du cadre 46b, et disposent de préférence d'une arête commune, de sorte qu'ils constituent un élément de section en forme de L.

L'extension 52b n'est pas directement au contact avec le flanc latéral 54b opposé au flanc 54a et s'étendant selon un plan XZ, puisqu'il est prévu d'interposer un support d'extension latérale 68b entre ce même flanc 54b et l'extension 52b. En effet, ce support 68b réalisé dans la même pièce que les autres éléments précités prend la forme d'une surépaisseur selon la direction Y, s'étendant extérieurement à partir du flanc latéral 54b. Ici encore, sa fonction est d'obturer un passage d'extension 70b pratiqué dans le panneau latéral 30 adjacent dans le but de pouvoir installer ce panneau après avoir mis en place la nervure 23 sur le caisson 22, bien entendu en faisant en sorte que l'extension 52b traverse le passage 70b durant la mise en position du panneau latéral 30.

L'obturation du passage 70b est recherchée de manière à pouvoir conserver l'étanchéité du caisson 22. Par ailleurs, toujours dans un souci de pouvoir assurer une bonne continuité aérodynamique sur la surface extérieure latérale du caisson central essentiellement formée par la surface extérieure du panneau latéral 30, on fait en sorte qu'une surface extérieure 72b du support d'extension 68b se situe sensiblement dans un même plan que la surface extérieure 74b du panneau latéral précité.

Ici encore, il est noté que dans la mesure où le flanc latéral 54b de la nervure 23 est au contact d'une surface intérieure du panneau latéral 30, l'épaisseur du support d'extension 68b est sensiblement identique à celle de ce même panneau 30.

A nouveau en référence à la figure 9, on peut apercevoir que la fixation du caisson latéral 24a sur le caisson 22 s'effectue également en montant une cornière 76a sur le panneau latéral 30, entre les deux extrémités supérieures des cadres de fermeture 28a et 46a. Cette cornière 76a peut alors servir de support pour la peau 44a, qui repose également sur les semelles supérieures des deux cadres 28a et 46a. Un agencement analogue est bien entendu prévu pour la fixation du caisson latéral 24b.

La figure 10 montre que la nervure 23 peut présenter une ouverture centrale 80, qui permet de diminuer la masse globale de celle-ci. Par ailleurs, elle peut également comporter un renfort 82 s'étendant grossièrement selon la direction Y. Plus précisément, ce renfort 82 réalisé d'un seul tenant avec le reste de la pièce peut présenter une courbure similaire à celle des semelles supérieures des cadres 46a, 46b, et disposer de deux extrémités latérales se situant sensiblement et respectivement dans le prolongement de ces deux semelles supérieures 60a, 60b, ou bien sensiblement et respectivement dans le prolongement des deux secondes portions 64a, 64b. Cette spécificité permet d'assurer une continuité dans la reprise des efforts transitant par la nervure transversale 23.

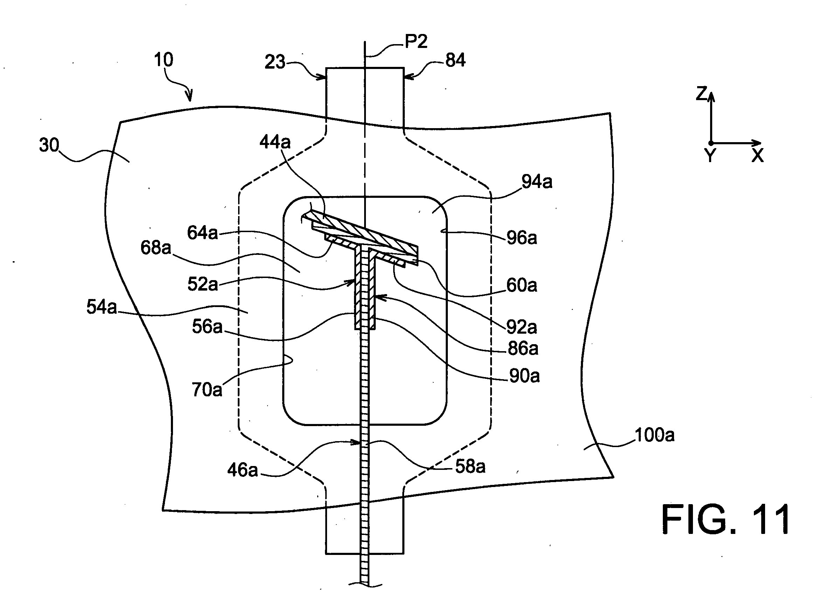

En référence à présent à la figure 11, on voit que le mât d'accrochage peut comporter une nervure transversale additionnelle 84 disposée de façon superposée à la nervure 23 décrite ci-dessus, selon la direction X. Elle permet de consolider le maintien mécanique des cadres de fermeture arrière 46a, 46b, ou bien encore de procurer une fonction « Fail Safe » en cas de rupture ou de défaillance de la pièce réalisée d'un seul tenant et intégrant la nervure 23.

Les deux nervures 23, 84 sont alors en contact surfacique selon un plan P2 orienté selon les directions Y et Z.

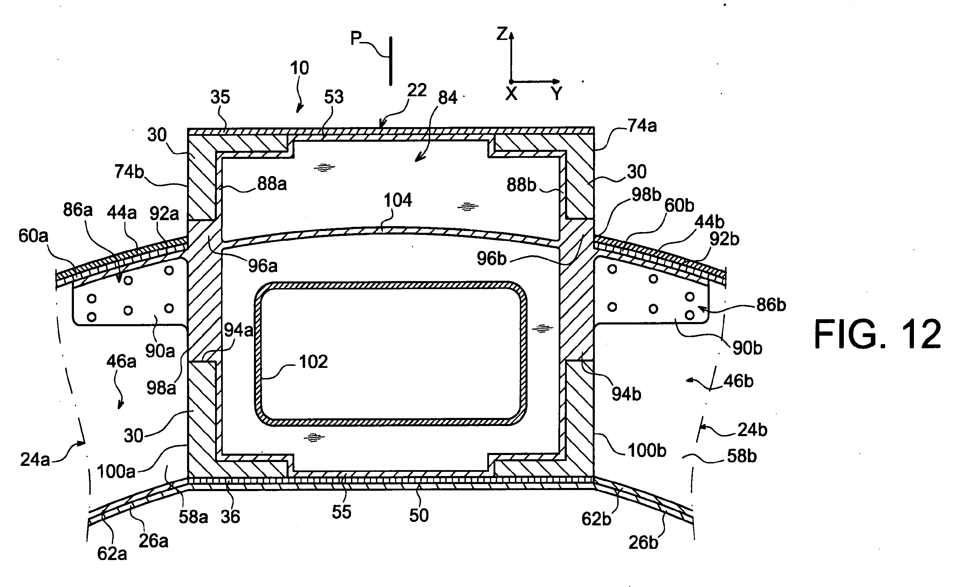

En référence à la figure 12 montrant la nervure additionnelle 84 vue depuis l'arrière, on peut apercevoir que celle-ci est intégrée dans une pièce réalisée d'un seul tenant similaire à celle décrite ci-dessus et intégrant la nervure 23.

En effet, la nervure additionnelle 84 est munie de deux extensions latérales additionnelles 86a, 86b réalisées d'un seul tenant avec celle-ci, par exemple dans un matériau métallique tel que le titane.

Chaque extension latérale 86a, 86b s'étend donc globalement dans la direction Y à partir de l'un des deux flancs latéraux 88a, 88b de la nervure 84 pour faire saillie de son panneau latéral 30 associé, impliquant que chaque extension latérale 86a, 86b se situe extérieurement par rapport au caisson central 22.

Plus précisément, en ce qui concerne l'extension 86a, celle-ci comporte une première portion 90a montée fixement sur l'âme 58a du cadre 46a, par exemple à l'aide de moyens d'assemblage du type boulons. Comme on le voit sur la figure 11, les premières portions 56a, 90a sont disposées en contact et de part et d'autre de l'âme 58a, la portion 56a côté intérieur du caisson 24a, et la portion 90a côté extérieur de ce même caisson. Ainsi, la première portion 90a se trouve également dans un plan YZ, en contact plan avec l'âme sur laquelle elle est montée fixement.

Par ailleurs, l'extension 86a comporte aussi une seconde portion 92a montée fixement sur la semelle supérieure 60a du cadre 46a, par exemple à l'aide de moyens d'assemblage du type boulons. Ainsi, la seconde portion 92a dispose d'une forme adaptée pour suivre le profil courbe de la semelle supérieure 60a. Elle est de préférence au contact d'une surface inférieure de la semelle 60a, côté extérieur du caisson 24a contrairement à la seconde portion 64a de l'extension 52a qui est côté extérieur de ce caisson 24a, comme cela est clairement visible sur la figure 11.

Par ailleurs, il est noté que les deux portions de l'extension 90a, 92a s'étendent sur une longueur sensiblement identique le long du cadre 46a, et disposent de préférence d'une arête commune, de sorte qu'ils constituent un élément de section en forme de L.

L'extension additionnelle 86a n'est pas directement au contact avec le flanc latéral 88a s'étendant selon un plan XZ, puisqu'il est prévu d'interposer un support d'extension latérale 94a entre ce même flanc 88a et l'extension 86a. En effet, ce support 94a réalisé dans la même pièce que les autres éléments précités prend la forme d'une surépaisseur selon la direction Y, s'étendant extérieurement à partir du flanc latéral 88a. Comme cela est le mieux visible sur la figure 12, sa fonction est d'obturer un passage d'extension 96a pratiqué dans le panneau latéral 30 adjacent. Il est précisé que ce passage 96a est réalisé dans le but de pouvoir installer le panneau 30 après avoir mis en place la nervure 84 sur le caisson 22, bien entendu en faisant en sorte que l'extension 86a traverse le passage 96a durant la mise en position du panneau latéral 30.

L'obturation du passage 96a est recherchée de manière à pouvoir conserver l'étanchéité du caisson 22, malgré la présence de ce passage requise pour permettre la mise en position du panneau latéral 30 fermant latéralement le caisson central 22.

A ce titre, il est indiqué comme cela est le mieux visible sur la figure 11 que les deux passages 70a, 96a pratiqués dans le même panneau latéral 30 constitue en passage unique, par exemple de forme rectangulaire, qui est obturé par les deux supports 68a, 94a disposés de façon adjacente selon la direction X.

Pour pouvoir assurer une bonne continuité aérodynamique sur la surface extérieure latérale du caisson central essentiellement formée par la surface extérieure du panneau latéral 30, on fait en sorte qu'une surface extérieure 98a du support d'extension 94a se situe sensiblement dans un même plan que la surface extérieure 100a du panneau latéral précité, comme on peut clairement l'apercevoir sur la figure 12.

A cet égard, il est noté que dans la mesure où le flanc latéral 88a de la nervure 84 est au contact d'une surface intérieure du panneau latéral 30, l'épaisseur du support d'extension 94a est sensiblement identique à celle de ce même panneau 30.

En ce qui concerne l'extension 86b, celle-ci est le symétrique de l'extension 86a par rapport au plan P, qui constitue de préférence un plan de symétrie pour l'ensemble de la pièce réalisée d'un seul tenant et intégrant la nervure 84.

Ainsi, l'extension 86b comporte une première portion 90b montée fixement sur l'âme 58b du cadre de fermeture 46b, par exemple à l'aide de moyens d'assemblage du type boulons, et toujours de manière à ce que les premières portions 56b, 90b soient disposées de part et d'autre de l'âme 58b. Ainsi, la première portion 90b se trouve également dans un plan YZ, en contact plan avec l'âme sur laquelle elle est montée fixement.

L'extension 86b comporte aussi une seconde portion 92b montée fixement sur la semelle supérieure 60b du cadre 46b, par exemple à l'aide de moyens d'assemblage du type boulons. Ainsi, la seconde portion 92b dispose d'une forme adaptée pour suivre le profil courbe de la semelle supérieure 60b. Elle est de préférence au contact d'une surface inférieure de la semelle 60b, sur laquelle elle est montée fixement, préférentiellement côté extérieur du caisson 24b.

Par ailleurs, il est noté que les deux portions de l'extension 90b, 92b s'étendent sur une longueur sensiblement identique le long du cadre 46b, et disposent de préférence d'une arête commune, de sorte qu'ils constituent un élément de section en forme de L.

L'extension 86b n'est pas directement au contact avec le flanc latéral 88b opposé au flanc 88a et s'étendant selon un plan XZ, puisqu'il est prévu d'interposer un support d'extension latérale 94b entre ce même flanc 88b et l'extension 86b. En effet, ce support 94b réalisé dans la même pièce que les autres éléments précités prend la forme d'une surépaisseur selon la direction Y, s'étendant extérieurement à partir du flanc latéral 88b. Ici encore, sa fonction est d'obturer un passage d'extension 96b pratiqué dans le panneau latéral 30 adjacent dans le but de pouvoir installer ce panneau après avoir mis en place la nervure 84 sur le caisson 22, bien entendu en faisant en sorte que l'extension 86b traverse le passage 96b durant la mise en position du panneau latéral 30.

L'obturation du passage 96b, formant un passage unique avec le passage 70b précité, est recherchée de manière à pouvoir conserver l'étanchéité du caisson 22. Par ailleurs, toujours dans un souci de pouvoir assurer une bonne continuité aérodynamique sur la surface extérieure latérale du caisson central essentiellement formée par la surface extérieure du panneau latéral 30, on fait en sorte qu'une surface extérieure 98b du support d'extension 94b se situe sensiblement dans un même plan que la surface extérieure 100b du panneau latéral précité.

Ici encore, il est noté que dans la mesure où le flanc latéral 88b de la nervure 84 est au contact d'une surface intérieure du panneau latéral 30, l'épaisseur du support d'extension 94b est sensiblement identique à celle de ce même panneau 30.

La figure 12 montre que la nervure 84 peut présenter une ouverture centrale 102, qui permet de diminuer la masse globale de celle-ci, et qui se situe dans le prolongement arrière de l'ouverture 80 réalisé dans la nervure 23. Par ailleurs, elle peut également comporter un renfort 104 s'étendant grossièrement selon la direction Y, préférentiellement dans le prolongement arrière du renfort 82 précité. Plus précisément, ce renfort 104 réalisé d'un seul tenant avec le reste de la pièce peut présenter une courbure similaire à celle des semelles supérieures des cadres 46a, 46b, et disposer de deux extrémités latérales se situant sensiblement et respectivement dans le prolongement de ces deux semelles supérieures 60a, 60b, ou bien sensiblement et respectivement dans le prolongement des deux secondes portions 92a, 92b. Cette spécificité permet d'assurer une continuité dans la reprise des efforts transitant par la nervure transversale 84.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure, voire en partie arrière du fuselage de l'aéronef.

D'autre part, si la description décrit de façon détaillée l'application préférée de l'invention pour le raccordement des cadres de fermeture arrière des caissons latéraux, il est noté que l'invention pourrait également s'appliquer, simultanément ou alternativement, pour le raccordement des cadres intermédiaires ou des cadres de fermeture avant qui ont été présentés ci-dessus. Le dernier cas envisagé est naturellement applicable lorsque les deux cadres de fermeture avant ne sont pas réalisés d'un seul tenant comme cela a été décrit précédemment. Il est notamment mis en oeuvre lorsque la conception de la structure rigide est telle que le caisson central longitudinal s'étend plus vers l'avant que les deux caissons latéraux.

## Revendications

1. Mât d'accrochage (4) de turboréacteur (2) pour aéronef, le mât disposant d'une structure rigide (10) comportant un caisson central longitudinal (22) formé par l'assemblage de deux panneaux latéraux (30) raccordés par l'intermédiaire de nervures transversales (23), ladite structure rigide (10) comportant également deux caissons latéraux (24a, 24b) solidaires d'une partie avant dudit caisson central (22) et disposés de part et d'autre de celui-ci, chaque caisson latéral (24a, 24b) disposant d'au moins un cadre (28a, 28b, 29a, 29b, 46a, 46b),
**caractérisé en ce que** l'une desdites nervures transversales (23) formant le caisson central longitudinal (22) est équipée de deux extensions latérales (52a, 52b) réalisées d'un seul tenant avec cette nervure (23) et faisant respectivement saillie des deux panneaux latéraux (30) du caisson central longitudinal (22), vers l'extérieur de ce dernier, les deux extensions latérales (52a, 52b) étant montées fixement sur ledit cadre (28a, 28b, 29a, 29b, 46a, 46b) de l'un et l'autre des deux caissons latéraux (24a, 24b), respectivement.

2. Mât d'accrochage (4) pour aéronef selon la revendication 1, **caractérisé en ce que** pour chacun des deux caissons latéraux (24a, 24b), ledit cadre (28a, 28b, 29a, 29b, 46a, 46b) sur lequel les deux extensions latérales (52a, 52b) sont montées fixement est un élément du caisson pris parmi un cadre de fermeture avant (28a, 28b), un cadre de fermeture arrière (46a, 46b), et un cadre intermédiaire (29a, 29b) situé à l'intérieur du caisson.

3. Mât d'accrochage (4) pour aéronef selon la revendication 1, **caractérisé en ce que** pour chacun des deux caissons latéraux (24a, 24b), ledit cadre (28a, 28b, 29a, 29b, 46a, 46b) sur lequel les deux extensions latérales (52a, 52b) sont montées fixement est un cadre de fermeture arrière (46a, 46b) du caisson.

4. Mât d'accrochage (4) pour aéronef selon la revendication 3, **caractérisé en ce que** le cadre de fermeture arrière (46a, 46b) de chacun des deux caissons latéraux (24a, 24b) dispose d'une âme (58a, 58b) de part et d'autre de laquelle se situent une semelle inférieure (62a, 62b) et une semelle supérieure (60a, 60b), lesdites extensions latérales (52a, 52b) présentant chacune une première portion (56a, 56b) montée fixement sur l'âme de son cadre de fermeture associé.

5. Mât d'accrochage (4) pour aéronef selon la revendication 4, **caractérisé en ce que** lesdites extensions latérales (52a, 52b) présentent chacune une seconde portion (64a, 64b) montée fixement sur la semelle supérieure (60a, 60b) de son cadre de fermeture associé.

6. Mât d'accrochage (4) pour aéronef selon l'une quelconque des revendications 3 à 5, **caractérisé en ce que** chacune desdites extensions latérales (52a, 52b) est raccordée à la nervure transversale (23) par l'intermédiaire d'un support d'extension (68a, 68b) également réalisé d'un seul tenant avec ladite nervure transversale et les deux extensions latérales, ledit support d'extension (68a, 68b) étant agencé de manière à obturer un passage d'extension (70a, 70b) pratiqué dans le panneau latéral associé (30).

7. Mât d'accrochage (4) pour aéronef selon la revendication 6, **caractérisé en ce que** pour chacune des deux extensions latérales (52a, 52b), une surface extérieure (72a, 72b) du support d'extension se situe sensiblement dans un même plan qu'une surface extérieure (74a, 74b) du panneau latéral associé.

8. Mât d'accrochage (4) pour aéronef selon l'une quelconque des revendications 3 à 7, **caractérisé en ce qu'**il comporte en outre une nervure transversale additionnelle (84) superposée à ladite nervure transversale (23) équipée desdites deux extensions latérales (52a, 52b), ladite nervure transversale additionnelle étant également équipée de deux extensions latérales additionnelles (86a, 86b) réalisées d'un seul tenant avec cette nervure et faisant respectivement saillie des deux panneaux latéraux (30) du caisson central longitudinal, vers l'extérieur de ce dernier, les deux extensions latérales additionnelles (86a, 86b) étant montées fixement sur le cadre de fermeture arrière (46a, 46b) de l'un et l'autre des deux caissons latéraux, respectivement.

9. Mât d'accrochage (4) pour aéronef selon la revendication 8, **caractérisé en ce que** pour chacun des deux caissons latéraux (24a, 24b), une extension latérale (52a, 52b) et une extension latérale additionnelle (86a, 86b) sont disposées de part et d'autre d'une âme (58a, 58b) du cadre de fermeture arrière (46a, 46b).

10. Mât d'accrochage (4) pour aéronef selon la revendication 8 ou la revendication 9, **caractérisé en ce que** le cadre arrière de chacun des deux caissons latéraux (24a, 24b) dispose d'une âme (46a, 46b) de part et d'autre de laquelle se situent une semelle inférieure (62a, 62b) et une semelle supérieure (60a, 60b), lesdites extensions latérales additionnelles (86a, 86b) présentant chacune une première portion (90a, 90b) montée fixement sur l'âme de son cadre de fermeture associé.

11. Mât d'accrochage (4) pour aéronef selon la revendication 10, **caractérisé en ce que** lesdites extensions latérales additionnelles (86a, 86b) présentent chacune une seconde portion (92a, 92b) montée fixement sur la semelle supérieure de son cadre de fermeture associé.

12. Mât d'accrochage (4) pour aéronef selon l'une quelconque des revendications 8 à 11, **caractérisé en ce que** chacune desdites extensions latérales additionnelles (86a, 86b) est raccordée à la nervure transversale additionnelle (84) par l'intermédiaire d'un support d'extension additionnelle (94a, 94b) également réalisé d'un seul tenant avec ladite nervure transversale additionnelle et les deux extensions latérales additionnelles, ledit support d'extension additionnelle (94a, 94b) étant agencé de manière à obturer un passage d'extension additionnelle (96a, 96b) pratiqué dans le panneau latéral associé (30).

13. Mât d'accrochage (4) pour aéronef selon la revendication 12, **caractérisé en ce que** pour chacune des deux extensions latérales additionnelles (86a, 86b), une surface extérieure (98a, 98b) du support d'extension additionnelle se situe sensiblement dans un même plan qu'une surface extérieure (100a, 100b) du panneau latéral associé.

14. Mât d'accrochage (4) pour aéronef selon les revendications 6 et 12 combinées, **caractérisé en ce que** pour chacun des deux panneaux latéraux du caisson central longitudinal (22), ledit passage d'extension (70a, 70b) et ledit passage d'extension additionnelle (96a, 96b) forment conjointement un unique passage obturé par lesdits support d'extension (68a, 68b) et support d'extension additionnelle (94a, 94b).

15. Aéronef **caractérisé en ce qu'**il comprend au moins un mât d'accrochage (4) selon l'une quelconque des revendications précédentes.

## Claims

1. An engine mount (4) for an aircraft turbojet engine (2), the mount having a rigid structure (10) comprising a longitudinal central box (22) formed by the assembly of two side panels (30) joined via transverse ribs (23), said rigid structure (10) also comprising two side boxes (24a, 24b) secured to a forward part of said central box (22) and arranged either side thereof, each side box (24a, 24b) having at least one frame (28a, 28b, 29a, 29b, 46a, 46b),
**characterized in that** one of said transverse ribs (23) forming the longitudinal central box (22) is equipped with two side extensions (52a, 52b) made in a single piece with this rib (23) and respectively projecting from the side panels (30) outwardly from the longitudinal central box (22), the two side extensions (52a, 52b) being fixedly mounted on said frame (28a, 28b, 29a, 29b, 46a, 46b) of each the two side boxes (24a, 24b), respectively.

2. An aircraft engine mount (4) according to claim 1, **characterized in that** for each of the two side boxes (24a, 24b), said frame (28a, 28b, 29a, 29b, 46a, 46b) on which the two side extensions (52a, 52b) are fixedly mounted is a box element from among a forward closure frame (28a, 28b), an aft closure frame (46a, 46b), and an intermediate frame (29a, 29b) located inside the box.

3. The aircraft engine mount (4) according to claim 1, **characterized in that** for each of the two side boxes (24a, 24b), said frame (28a, 28b, 29a, 29b, 46a, 46b) on which the two side extensions (52a, 52b) are fixedly mounted is an aft closure frame (46a, 46b) of the box.

4. The aircraft engine mount (4) according to claim 3, **characterized in that** the aft closure frame (46a, 46b) of each of the two side boxes (24a, 24b) has a core (58a, 58b) either side of which there is a lower bearing plate (62a, 62b) and an upper bearing plate (60a, 60b), said side extensions (52a, 52b) each having a first portion (56a, 56b) fixedly mounted on the core of its associated closure frame.

5. The aircraft engine mount (4) according to claim 4, **characterized in that** said side extensions (52a, 52b) each have a second portion (64a, 64b) fixedly mounted on the upper bearing plate (60a, 60b) of its associated closure frame.

6. The aircraft engine mount (4) according to any of claims 3 to 5, **characterized in that** each of said side extensions (52a, 52b) is joined to the transverse rib (23) via an extension support (68a, 68b) also made in a single piece with said transverse rib and the two side extensions, said extension support (68a, 68b) being arranged so as to close an extension throughway (70a, 70b) made in the associated side panel (30).

7. The aircraft engine mount (4) according to claim 6, **characterized in that** for each of the two side extensions (52a, 52b), an outer surface (72a, 72b) of the extension support is located substantially in a same plane as an outer surface (74a, 74b) of the associated side panel.

8. The aircraft engine mount (4) according to any of claims 3 to 7, **characterized in that** it also comprises an additional transverse rib (84) superimposed over said transverse rib (23) equipped with said two side extensions (52a, 52b), said additional transverse rib also being equipped with two additional side extensions (86a, 86b) made in a single piece with this transverse rib and respectively projecting from the two side panels (30) of the longitudinal central box, outwardly from this box, the two additional side extensions (86a, 86b) being fixedly mounted on the aft closure frame (46a, 46b) of each of the two side boxes, respectively.

9. The aircraft engine mount (4) according to claim 8, **characterized in that** for each of the two side boxes (24a, 24b), a side extension 52a, 52b) and an additional side extension (86a, 86b) are arranged either side of a core (58a, 58b) of the aft closure frame (46a, 46b).

10. The aircraft engine mount (4) according to claim 8 or claim 9, **characterized in that** the aft frame of each of the two side boxes (24a, 24b) has a core (46a, 46b) on either side of which there is a lower bearing plate (62a, 62b) and an upper bearing plate (60a, 60b), said additional side extensions (86a, 86b) each having a first portion (90a, 90b) fixedly mounted on the core of its associated closure frame.

11. The aircraft engine mount (4) according to claim 10, **characterized in that** said additional side extensions (86a, 86b) each have a second portion (92a, 92b) fixedly mounted on the upper bearing plate of its associated closure frame.

12. The aircraft engine mount (4) according to any of claims 8 to 11, **characterized in that** each of said additional side extensions (86a, 86b) is joined to the additional transverse rib (84) via a support (94a, 94b) for additional extension, also made in a single piece with said additional transverse rib and the two additional side extensions, said support (94a, 94b) for additional extension being arranged so as to close a throughway (96a, 96b) for additional extension made in the associated side panel (30).

13. The aircraft engine mount (4) according to claim 12, **characterized in that** for each of the two additional side extensions (86a, 86b), an outer surface (98a, 98b) of the support for additional extension is located substantially in a same plane as an outer surface (100a, 100b) of the associated side panel.

14. The aircraft engine mount (4) according to claims 6 and 12 combined, **characterized in that** for each of the two side panels of the longitudinal central box (22), said extension throughway (70a, 70b) and said throughway (96a, 96b) for additional extension jointly form a single throughway closed by said extension supports (68a, 68b) and supports (94a, 94b) for additional extension.

15. The aircraft **characterized in that** it comprises at least one engine mount (4) according to any of the preceding claims.

## Patentansprüche

1. Aufhängungssystem (4) eines Turbostrahltriebwerks (2) für ein Luftfahrzeug, wobei das System eine starre Struktur (10) aufweist, die einen zentralen Längskasten (22) umfasst, der durch die Anordnung von zwei über Querrippen (23) verbundenen Seitenplatten (30) ausgebildet ist, wobei die starre Struktur (10) auch zwei Seitenkästen (24a, 24b) aufweist, die mit einem vorderen Bereich des zentralen Kastens (22) fest verbunden sind und auf der einen bzw. der anderen Seite desselben angeordnet sind, wobei jeder Seitenkasten (24a, 24b) mindestens einen Rahmen (28a, 28b, 29a, 29b, 46a, 46b) aufweist,
**dadurch gekennzeichnet, dass** eine der Querrippen (23), die den zentralen Längskasten (22) bilden, mit zwei seitlichen Verlängerungen (52a, 52b) ausgestattet ist, die einstückig mit dieser Rippe (23) ausgeführt sind und jeweils von den beiden Seitenplatten (30) des zentralen Längskastens (22) von Letzterem nach außen vorspringen, wobei die beiden seitlichen Verlängerungen (52a, 52b) fest an dem Rahmen (28a, 28b, 29a, 29b, 46a, 46b) von dem einen bzw. dem anderen der beiden Seitenkästen (24a, 24b) angebracht sind.

2. Aufhängungssystem (4) für ein Luftfahrzeug nach Anspruch 1, **dadurch gekennzeichnet, dass** für jeden der beiden Seitenkästen (24a, 24b) der Rahmen (28a, 28b, 29a, 29b, 46a, 46b), an dem die beiden seitlichen Verlängerungen (52a, 52b) fest angebracht sind, ein Kastenelement ist, das aus einem vorderen Verschlussrahmen (28a, 28b), einem hinteren Verschlussrahmen (46a, 46b) und einem im Inneren des Kastens befindlichen Zwischenrahmen (29a, 29b) ausgewählt ist.

3. Aufhängungssystem (4) für ein Luftfahrzeug nach Anspruch 1, **dadurch gekennzeichnet, dass** für jeden der beiden Seitenkästen (24a, 24b) der Rahmen (28a, 28b, 29a, 29b, 46a, 46b), an dem die beiden seitlichen Verlängerungen (52a, 52b) fest angebracht sind, ein hinterer Verschlussrahmen (46a, 46b) des Kastens ist.

4. Aufhängungssystem (4) für ein Luftfahrzeug nach Anspruch 3, **dadurch gekennzeichnet, dass** der hintere Verschlussrahmen (46a, 46b) von jedem der beiden Seitenkästen (24a, 24b) ein Kernteil (58a, 58b) aufweist, auf dessen beiden Seiten sich eine untere Auflageplatte (62a, 62b) bzw. eine obere Auflageplatte (60a, 60b) befindet, wobei die seitlichen Verlängerungen (52a, 52b) jeweils einen ersten Bereich (56a, 56b) aufweisen, der fest an dem Kernteil des ihnen zugeordneten Verschlussrahmens befestigt ist.

5. Aufhängungssystem (4) für ein Luftfahrzeug nach Anspruch 4, **dadurch gekennzeichnet, dass** die seitlichen Verlängerungen (52a, 52b) jeweils einen zweiten Bereich (64a, 64b) aufweisen, der fest an der oberen Auflageplatte (60a, 60b) des ihnen zugeordneten Verschlussrahmens befestigt ist.

6. Aufhängungssystem (4) für ein Luftfahrzeug nach einem der Ansprüche 3 bis 5, **dadurch gekennzeichnet, dass** jede der seitlichen Verlängerungen (52a, 52b) an der Querrippe (23) über einen Verlängerungsträger (68a, 68b), der ebenfalls einstückig mit der Querrippe und den beiden seitlichen Verlängerungen ausgeführt ist, befestigt ist, wobei der Verlängerungsträger (68a, 68b) derart gestaltet ist, dass er eine in der zugeordneten Seitenplatte (30) ausgeführte Verlängerungspassage (70a, 70b) ausfüllt bzw. verschließt.

7. Aufhängungssystem (4) für ein Luftfahrzeug nach Anspruch 6, **dadurch gekennzeichnet, dass** sich für jede der beiden seitlichen Verlängerungen (52a, 52b) eine äußere Oberfläche (72a, 72b) des Verlängerungsträgers im Wesentlichen in einer gleichen Ebene wie eine äußere Oberfläche (74a, 74b) der zugeordneten Seitenplatte befindet.

8. Aufhängungssystem (4) für ein Luftfahrzeug nach einem der Ansprüche 3 bis 7, **dadurch gekennzeichnet, dass** es ferner eine zusätzliche Querrippe (84) aufweist, die der mit den beiden seitlichen Verlängerungen (52a, 52b) ausgestatteten Querrippe (23) überlagert ist, wobei die zusätzliche Querrippe ebenfalls mit zwei zusätzlichen seitlichen Verlängerungen (86a, 86b) ausgestattet ist, die einstückig mit dieser Rippe ausgeführt sind und jeweils von den beiden Seitenplatten (30) des zentralen Längskastens von diesem Letzteren nach außen vorspringen, wobei die beiden zusätzlichen seitlichen Verlängerungen (86a, 86b) fest an dem hinteren Verschlussrahmen (46a, 46b) von dem einen bzw. dem anderen der beiden Seitenkästen angebracht sind.

9. Aufhängungssystem (4) für ein Luftfahrzeug nach Anspruch 8, **dadurch gekennzeichnet, dass** für jeden der beiden Seitenkästen (24a, 24b) eine seitliche Verlängerung (52a, 52b) und eine zusätzliche seitliche Verlängerung (86a, 86b) auf der einen bzw. der anderen Seite eines Kernteils (58a, 58b) des hinteren Verschlussrahmens (46a, 46b) angebracht sind.

10. Aufhängungssystem (4) für ein Luftfahrzeug nach Anspruch 8 oder Anspruch 9, **dadurch gekennzeichnet, dass** der hintere Rahmen von jedem der beiden Seitenkästen (24a, 24b) ein Kernteil (46, 46b) aufweist, auf dessen beiden Seiten sich eine untere Auflageplatte (62a, 62b) bzw. eine obere Auflageplatte (60a, 60b) befindet, wobei die zusätzlichen seitlichen Verlängerungen (86a, 86b) jeweils einen ersten Bereich (90, 90b) aufweisen, der fest an dem Kernteil des ihnen zugeordneten Verschlussrahmens befestigt ist.

11. Aufhängungssystem (4) für ein Luftfahrzeug nach Anspruch 10, **dadurch gekennzeichnet, dass** die zusätzlichen seitlichen Verlängerungen (86a, 86b) jeweils einen zweiten Bereich (92a, 92b) aufweisen, der fest an der oberen Auflageplatte des ihnen zugeordneten Verschlussrahmens befestigt ist.

12. Aufhängungssystem (4) für ein Luftfahrzeug nach einem der Ansprüche 8 bis 11, **dadurch gekennzeichnet, dass** jede der zusätzlichen seitlichen Verlängerungen (86a, 86b) an der zusätzlichen Querrippe (84) über einen zusätzlichen Verlängerungsträger (94a, 94b), der ebenfalls einstückig mit der zusätzlichen Querrippe und den beiden zusätzlichen seitlichen Verlängerungen ausgeführt ist, befestigt ist, wobei der zusätzliche Verlängerungsträger (94a, 94b) derart gestaltet ist, dass er eine in der zugeordneten Seitenplatte (30) ausgeführte zusätzliche Verlängerungspassage (96a, 96b) ausfüllt bzw. verschließt.

13. Aufhängungssystem (4) für ein Luftfahrzeug nach Anspruch 12, **dadurch gekennzeichnet, dass** sich für jede der beiden zusätzlichen seitlichen Verlängerungen (86a, 86b) eine äußere Oberfläche (98a, 98b) des zusätzlichen Verlängerungsträgers im Wesentlichen in einer gleichen Ebene wie eine äußere Oberfläche (100a, 100b) der zugeordneten Seitenplatte befindet.

14. Aufhängungssystem (4) für ein Luftfahrzeug nach einer Kombination der Ansprüche 6 und 12, **dadurch gekennzeichnet, dass** für jede der beiden seitlichen Platten des zentralen Längskastens (22) die Verlängerungspassage (70a, 70b) und die zusätzliche Verlängerungspassage (96a, 96b) gemeinsam eine einzige Passage bilden, die durch den Verlängerungsträger (68a, 68b) und den zusätzlichen Verlängerungsträger (94a, 94b) ausgefüllt bzw. verschlossen wird.

15. Luftfahrzeug, **dadurch gekennzeichnet, dass** es mindestens ein Aufhängungssystem (4) nach einem der vorhergehenden Ansprüche umfasst.
